# FASCICULE DE BREVET EUROPEEN

(11) **EP 0 351 279 B1**
(45) Date de publication et mention de la délivrance du brevet: **03.02.1993**
(21) Numéro de dépôt: 89401873.8
(22) Date de dépôt: 29.06.1989
(51) Int. Cl.: H02B 1/26

(54) **Procédé pour l'installation, sur un support, d'au moins un appareillage électrique.**
Verfahren zur Montage von mindestens einem elektrischen Gerät auf einem Träger.
Method for the installation on a support of at least one electrical apparatus.

(30) Priorité: 01.07.1988 FR 8808943
(43) Date de publication de la demande: 17.01.1990
(73) Titulaire: LEGRAND, F-87045 Limoges Cédex (FR)
(72) Inventeur: Sarton, François, F-76123 Saint Victor L'Abbaye (FR); Barriuso, Jean-Pierre, F-76750 Buchy (FR); Robbes, Jean-Pierre, F-76300 Sotteville Les Rouen (FR); Roby, Gérard, F-76420 Bihorel (FR); Mullot, Bruno, F-76000 Rouen (FR); Weyland, Christian, F-76690 Cleres (FR); Huys, Alain, F-76850 Bosc le Hard (FR)
(74) Mandataire: CABINET BONNET-THIRION

(56) Documents cités:
- EP-A- 0 143 718
- FR-A- 2 579 839
- US-A- 2 871 284

## Description

La présente invention concerne, d'une manière générale, l'installation, sur un quelconque support, par exemple un mur, d'au moins un quelconque appareillage électrique à raccorder à au moins un câble d'arrivée et à au moins un câble de départ, eux-mêmes à "tirer", c'est-à-dire à installer, sur ce support.

Le câble d'arrivée assure l'alimentation de l'appareillage électrique concerné, tandis que le câble de départ en assure le raccordement aux organes ou appareils qu'il dessert.

En pratique, plusieurs appareillages électriques, tels que disjoncteurs ou autres, modulaires ou non, sont usuellement regroupés en un même lieu d'implantation, avec, entre eux, des câbles, ici appelés, par simple commodité, câbles de distribution.

Bien entendu, dans ce cas, il peut y avoir plusieurs câbles d'arrivée, et il y a nécessairement plusieurs câbles de départ.

Pour la protection de l'ensemble, aussi bien que pour des raisons de sécurité, il est usuel de disposer ces divers appareillages électriques au sein d'un enveloppe comportant un fond et un habillage tant latéral que frontal, avec, le plus souvent, frontalement, une porte donnant accès à son volume intérieur.

En pratique, pour des raisons de commodité, les appareillages électriques concernés ne sont pas directement portés par cette enveloppe.

Au contraire, ils sont usuellement rapportés, par simple encliquetage, sur des rails, et ceux-ci appartiennent usuellement à un châssis, qui, comportant en outre deux montants parallèles ou une platine, est solidaire, par ces montants ou cette platine, de l'enveloppe mise en oeuvre.

Ainsi, au terme de leur installation sur le support à équiper, les appareillages électriques concernés sont portés par un châssis rendu solidaire de ce support par l'enveloppe dans laquelle ils se trouvent alors disposés.

Le plus souvent, à ce jour, cette enveloppe, communément appelée armoire ou coffret, forme un ensemble d'un seul tenant, son fond étant rigidement relié au reste de son habillage.

Le problème, on le conçoit, est alors d'assurer le câblage des divers câbles à prendre en compte, c'est-à-dire le raccordement de ces divers câbles aux divers appareillages électriques qu'ils doivent desservir, ce câblage étant inévitablement rendu malaisé par la présence même d'une telle enveloppe dont l'accès au volume intérieur ne peut pour l'essentiel se faire que frontalement.

En pratique, ce câblage relève de deux corps de métier différents, celui des câbles d'arrivée et des câbles de départ étant plus spécifiquement assuré par un installateur, qui intervient nécessairement in situ, sur le chantier concerné, tandis que celui des câbles de distribution est plus spécifiquement assuré par un tableautier, qui peut lui aussi intervenir sur le chantier, mais qui peut aussi bien, si désiré, exécuter en atelier le câblage correspondant.

Pour faciliter le travail du tableautier, il a été proposé, notamment par le demande de brevet français qui, déposée le 1er Décembre 1983, sous le No 83 19380, a été publiée sous le numéro FR-A-2.556.169, de dissocier de son habillage le fond de l'enveloppe à mettre en oeuvre, et d'utiliser ce fond pour la constitution du châssis à équiper, en rapportant d'abord sur ce fond les autres constituants de ce châssis, l'habillage restant n'étant rapporté qu'ensuite sur le fond, après que les divers appareillages électriques concernés aient eux-mêmes été rapportés sur le châssis et que le câblage des câbles de distribution correspondants ait dûment été assuré.

Ainsi, ce câblage se trouve effectivement facilité. puisqu'un libre accès est alors laissé, tant frontalement que latéralement, aux divers appareillages électriques concernés.

Mais, après que le tableautier ait fait le nécessaire, l'enveloppe est reconstituée, en rapportant sur des pieds, solidaires du fond, les panneaux de côté nécessaires.

Il en résulte que, sur le chantier, sur lequel, de manière usuelle, les câbles d'arrivée et de départ ont par ailleurs été "tirés" par avance, le problème reste entier.

Il en est de même dans la demande de brevet français déposée le 1er Avril 1985 sous le No 85 04907 et publiée sous le numéro FR-A-2.579.839, dans laquelle, si des faces latérales et horizontales amovibles sont mises en oeuvre pour la constitution de l'habillage de l'enveloppe concernée, la face arrière de celle-ci fait partie intégrante du châssis correspondant, sans qu'une quelconque indication soit par ailleurs donnée sur l'ordre de succession des diverses opérations de fixation à assurer.

Il en est également de même lorsque, le châssis étant dissociable de l'enveloppe, il est procédé à l'équipement de ce châssis et au câblage correspondant avant que l'ensemble ne soit rapporté dans cette enveloppe.

La présente invention a d'une manière générale pour objet une disposition de nature à faciliter au contraire les opérations sur le chantier et conduisant en outre à d'autres avantages.

De manière plus précise, elle a tout d'abord pour objet un procédé pour l'installation, sur un support, d'au moins un quelconque appareillage électrique à raccorder à au moins un câble d'arrivée et à moins un câble de départ, du genre suivant lequel, au terme d'une telle installation, ledit appareillage électrique, porté par un châssis solidaire dudit support, est disposé au sein d'une enveloppe comportant un fond et un habillage tant latéral que frontal, ce procédé étant d'une manière générale caractérisé en ce que on fixe d'abord au support à équiper le fond de l'enveloppe, on rapporte sur ce fond le châssis, qui, parallèlement et indépendamment, a été équipé de l'appareillage concerné et câble en conséquence, et on met ensuite en place l'habillage correspondant.

Ainsi, suivant l'invention, le fond de l'enveloppe finale forme un élément totalement distinct du châssis à équiper, et ce châssis est équipé et câblé indépendamment de ce fond, avant être rapporté sur celui-ci.

Il en résulte un double avantage.

Tout d'abord, ce châssis présentant, par ailleurs, par lui-même, de manière connue en soi, toute la rigidité souhaitable, le travail du tableautier, qu'il soit effectué en atelier ou sur le chantier, est facilité par l'absence de tout habillage aussi bien que par l'absence de tout fond.

Mais, sur le chantier, le travail de l'installateur se trouve également facilité puisqu'il peut lui aussi être exécuté en l'absence de cet habillage.

De surcroît, formant une pièce distincte, le fond suivant l'invention peut avantageusement être mis en place sur le support à équiper avant même le tirage des câbles d'arrivée et des câbles de départ sur celui-ci.

Le câblage ultérieur de ces câbles d'arrivée et de ces câbles de départ en est rendu plus aisé, et, si désiré, ces câbles peuvent même s'étendre par dessus le fond, aussi bien d'ailleurs que des barres de distribution, ce qui permet, avec une grande souplesse, l'adaptation de l'ensemble à des conditions d'implantation très diverses pour les installations à réaliser.

La disposition suivant l'invention favorise en outre avantageusement une réalisation modulaire de ces installations.

Mais, du fait que, si chaque châssis forme un élément distinct du fond correspondant, l'habillage commun à l'ensemble n'est rapporté qu'ultérieurement, après que ces châssis dûment équipés aient eux-mêmes été rapportés sur ces fonds et que les câblages nécessaires aient été exécutés, il est avantageusement possible, suivant l'invention, de relier rigidement l'un à l'autre ces châssis, d'un module à l'autre, et de reconstituer ainsi globalement un châssis unique pour l'ensemble de ces modules, au bénéfice de la rigidité d'un tel ensemble.

Les caractéristiques et avantages de l'invention ressortiront d'ailleurs de la description qui va suivre, en référence aux dessins schématiques annexés sur lesquels :
la figure 1 est une vue en perspective éclatée des divers composants propres à l'installation, suivant l'invention, d'au moins un quelconque appareillage électrique sur un quelconque support ;
les figures 2, 3 sont des vues partielles en perspective qui, reprenant chacune pour partie celle de la figure 1, se rapportent, chacune respectivement, à deux variantes de mise en oeuvre de l'invention.

Tel qu'illustré sur ces figures, il s'agit globalement, d'installer, sur un quelconque support 10, en pratique un mur, au moins un quelconque appareillage électrique 11 à raccorder à au moins un câble d'arrivée 12 et à au moins un câble de départ 13.

En pratique, et c'est le cas dans les formes de mise en oeuvre représentées, il y a ainsi, à regrouper en un même lieu d'implantation, et répartis par exemple en une ou plusieurs rangées, plusieurs appareillages électriques 11, avec, entre eux, des câbles de distribution non représentés.

Bien entendu, et tel que représenté, il y a, alors, le plus souvent, dans ce cas, plusieurs câbles d'arrivée 12 et, en nombre supérieur, plusieurs câbles de départ 13.

Quoi qu'il en soit, au terme de leur installation, les appareillages électriques 11 concernés doivent être disposés au sein d'une enveloppe 14 comportant un fond 15 et un habillage tant latéral que frontal 16.

L'habillage 16 de cette enveloppe 14 peut par exemple comporter, latéralement, des panneaux de côté 17 et, frontalement, un plastron 18 ajouré d'ouvertures 19 donnant accès à la partie de façade des appareillages électriques 11.

Tel que partiellement schématisé en traits interrompus, une port 20, dûment montée pivotante sur l'un de ses côtés, peut, si désiré, compléter un tel habillage 16.

Suivant l'invention le fond 15 forme un composant distinct de cet habillage 16, et, dans la forme de réalisation représentée, les panneaux de côté 17 et le plastron 18 appartenant à cet habillage 16 forment eux-mêmes des composants distincts les uns des autres.

Par exemple, et tel que représenté, le fond 15 comporte, rigidement assujettis l'un à l'autre, d'une part, une platine 22, de contour globalement quadrangulaire, et, d'autre part, ceinturant cette platine 22 à sa périphérie, en faisant légèrement saillie sur celle-ci, un cadre 23.

Pour permettre son assujettissement au support 10 à équiper, le fond 15 ainsi constitué présente, de place en place, sur sa platine 22, et par exemple dans les zones d'angle de celle-ci, des perçages 24 propres au passage de moyens de fixation, vis par exemple, appropriés.

En pratique, et de manière connue en soi, les appareillages électriques 11 à installer doivent, par ailleurs, être portés par un châssis 25.

De manière connue en soi, ce châssis 25 comporte, parallèlement l'un à l'autre, dans la forme de mise en oeuvre représentée, deux montants 26, avec, de l'un à l'autre de ces montants, au moins un rail 27 propre à recevoir, par exemple par simple encliquetage, les appareillages électriques 11 concernés.

En pratique, dans cette forme de mise en oeuvre, les montants 26 sont des profilés en U sur lesquels sont rapportés, de place en place, par exemple par encliquetage, des plots 29 propres à l'établissement, de l'un à l'autre, des rails 27.

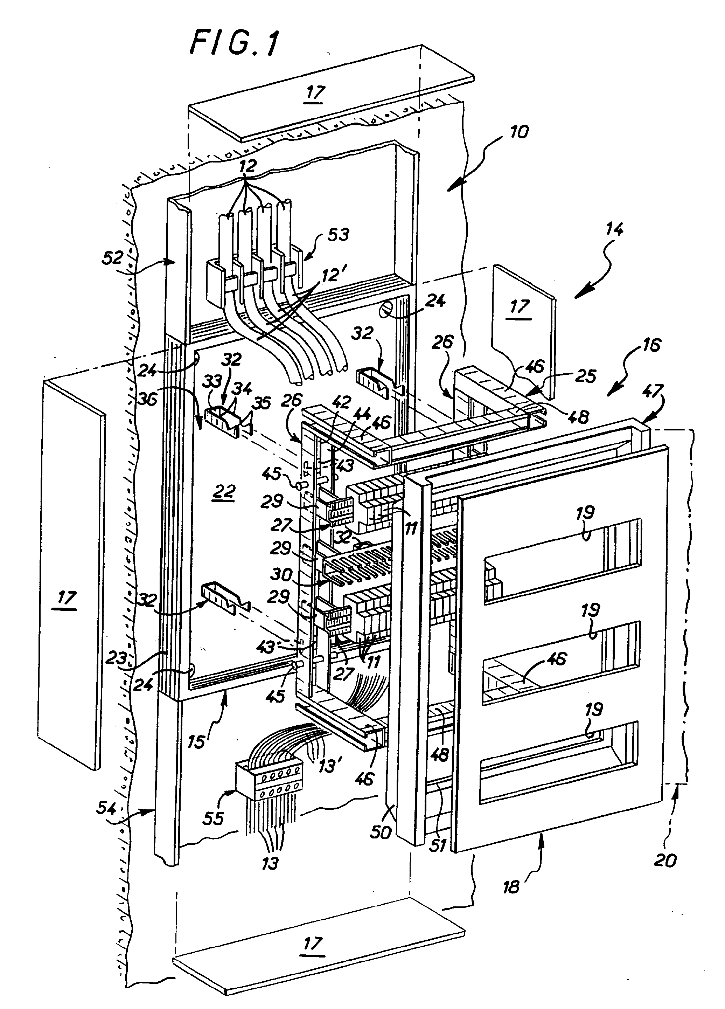

Dans les formes de mise en oeuvre représentées, il est prévu, en outre, de l'un à l'autre des montants 26, parallèlement aux rails 27, et en alternance avec ceux-ci, des goulottes 30, propres, notamment, au logement des câbles de distribution raccordant entre eux les appareillages électriques 11, et/ou à celui d'éventuels câbles de raccordement 13′ les raccordant aux câbles de départ 13 correspondants, lorsque, comme cela est le cas dans la forme de mise en oeuvre plus particulièrement représentée sur la figure 1, leur raccordement à ces câbles de départ 13 se fait de manière indirecte.

Suivant l'invention, le fond 15 comporte, en saillie, des moyens d'ancrage propres à permettre d'y rapporter le châssis 25.

Dans la forme de mise en oeuvre représentée, ces moyens d'ancrage comportent une pluralité de plots d'ancrage 32 établis de place en place sur le fond 15.

Par exemple, et tel que représenté, quatre plots d'ancrage 32, tous identiques entre eux, sont ainsi prévus, en étant établis, chacun respectivement, dans les zones d'angle de la platine 22 de ce fond 15.

Chacun d'eux se présente sous la forme d'une pièce en U.

Par leur partie médiane 33, ils sont rapportés sur la platine 22 du fond 15, par exemple par soudage ou vissage, et leurs ailes 34, qui s'étendent sensiblement perpendiculairement à cette platine 22, forment, à leur extrémité, un crochet 35 tourné vers le haut.

Le long de l'un au moins, et, en pratique, le long de chacun des bords du fond 15, entre ce bord et les moyens d'ancrage ainsi réalisés, il est ménagé, dans les formes de mise en oeuvre représentées, un espace libre 36.

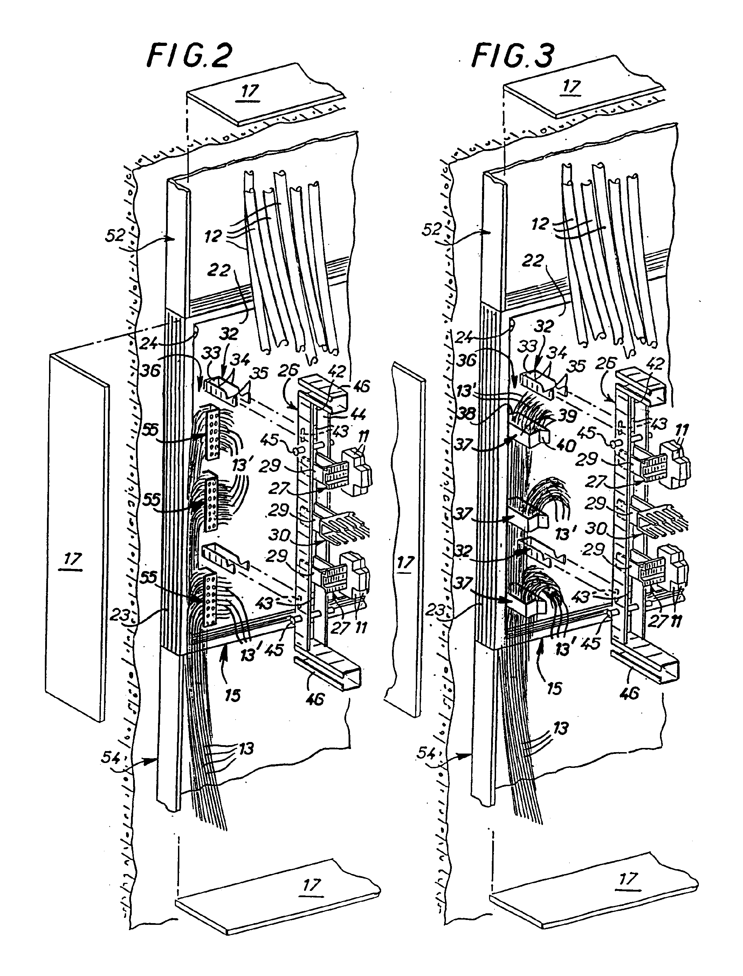

Si désiré et c'est le cas dans la forme de mise en oeuvre plus particulièrement représentée sur la figure 3, un tel espace libre 36 peut être mis à profit pour l'implantation, en saillie sur le fond 15, de moyens de logement propres à la réception d'au moins un câble.

Plus précisément, dans cette forme de mise en oeuvre, ces moyens de logement comportent une pluralité de lyres 37, au nombre de trois par exemple, et toutes identiques entre elles, établies de place en place le long du bord concerné du fond 15, en saillie sur la platine 22 de celui-ci.

Comme les plots d'ancrage 32, chacune de ces lyres 37 se présente par exemple sous la forme d'une pièce en U, dont la partie médiane 38, appliquée à la platine 22 du fond 15, sert à leur fixation à celui-ci, et dont lest ailes 39 s'étendent perpendiculairement à cette platine 22.

Mais, à leur extrémité, les ailes 39 de ces lyres 37 présentent, globalement en direction l'une de l'autre, dans la forme de mise en oeuvre représentée, des retours élastiquement déformables 40 qui se recouvrent légèrement l'une l'autre à leur propre extrémité.

En correspondance avec les ailes 34 des plots d'ancrage 32 que comporte le fond 15, les montants 26 du châssis 25 présentent chacun, sur leur partie médiane 42, deux boutonnières 43 propres à leur engagement sur un tel plot d'ancrage 32, avec, établi de l'une de leurs ailes 44 à l'autre, au droit de ces boutonnière 43, un axe 45 propre à leur crochetage sur les crochets 35 formés par les ailes 34 de ces plots d'ancrage 32.

Suivant l'invention, le châssis 25 comporte, en outre, perpendiculairement au plan formé par ses montants 26, des piliers 46 propres à former entretoises pour un cadre 47, qui, pour des raisons qui apparaîtront ultérieurement, est à rapporter sur lui.

Plus précisément, dans les formes de mise en oeuvre représentées, le châssis 25 comporte ainsi un pilier 46 à chacune des extrémités de chacun de ses montants 26.

Un tel pilier 46 peut par exemple être constitué par un tronçon de profilé, et il est convenablement assujetti, par exemple par soudage, ou vissage, au montant 26 concerné.

Bien que les rails 27 mis en oeuvre assurent déjà, par eux-mêmes, un certain entretoisement des montants 26, et contribuent donc de ce fait à la rigidité d'ensemble du châssis 25, il est de préférence prévu, entre ces montants 26, au moins une traverse 48 propre à un rigidification autonome de ce châssis 25.

Dans les formes de mise en oeuvre représentées, deux traverses 48 sont ainsi prévues.

Suivant l'invention, elles sont chacune respectivement établies d'un pilier 46 à un autre, à distance du plan formé par les montants 26.

Par exemple, et tel que représenté, elles s'étendent à l'extrémité des piliers 46 opposée à ces montants 26.

Ainsi, l'espace entre les montants 26 est totalement dégagé à la base des piliers 46.

Comme ces piliers 46, les traverses 48 peuvent par exemple être constituées par des tronçons de profilé, et elles sont convenablement assujetties, par exemple par soudage, ou vissage, à ces piliers 46.

Ainsi qu'on le notera, le châssis 25 ainsi réalisé présente par lui-même toute la rigidité souhaitable pour en permettre une station debout, ce qui en facilite le transport et le stockage, et ce qui facilite également le travail du tableautier qui a ensuite à l'équiper de rails 27, d'appareillages électriques 11, et, éventuellement de goulottes 30′.

Comme indiqué ci-dessus, le cadre 47 est destiné à être rapporté sur les piliers 46 de ce châssis 25, en bout de ceux-ci.

Son assujettissement à ces piliers 46 peut avantageusement se faire par exemple par simple encliquetage.

Dans les formes de mise en oeuvre représentées, le long du contour intérieur de ce cadre 47 se raccorde une paroi globalement tronc-pyramidale 50 portant elle-même, à son extrémité, en retrait par rapport au cadre 47, et parallèlement à celui-ci, un deuxième cadre 51 propre à recevoir, par exemple par simple encliquetage, le plastron 18.

Quoi qu'il en soit, le cadre 47 ainsi mis en oeuvre sert préférentiellement à la mise en place et au maintien des panneaux de côté 17.

Par exemple, et suivant des dispositions qui ne seront pas développées plus en détail ici, ces panneaux de côté 17 peuvent être pincés entre ce cadre 47 et le fond 15, tout en étant conjointement en prise, par exemple par emboîtement ou encliquetage, avec l'un et/ou l'autre de ceux-ci.

C'est également au cadre 47 que peut être articulée, si désiré, l'éventuelle porte 20 mise en oeuvre.

Cela étant, pour l'installation à réaliser, il est procédé, suivant l'invention, comme suit.

Sur le chantier, on fixe d'abord, au support 10 à équiper, le fond 15 de l'enveloppe 14 à former.

Ce n'est de préférence qu'après avoir ainsi fixé ce fond 15 sur ce support 10, et avant qu'y soit rapporté le châssis 25, qu'on dispose convenablement, par rapport à ce fond 15, les câbles d'arrivée 12 et les câbles de départ 13.

Dans la forme de mise en oeuvre représentée sur la figure 1, le raccordement des appareillages électriques 11 à ces câbles d'arrivée 12 et à ces câbles de départ 13 se fait de manière indirecte.

Les câbles d'arrivée 12, qui, préférentiellement, mais non nécessairement obligatoirement, sont disposés à l'intérieur d'une goulotte 52 appliquée au support 10 et aboutée au fond 15, sont, en effet chacun individuellement, raccordés, dans cette forme de mise en oeuvre, à un bornier 53 convenablement assujetti, d'un premier côté du fond 15, au fond de cette goulotte 52, ou, à travers ce fond, au support 10.

De même, de l'autre côté du fond 15, les câbles de départ 13, qui, préférentiellement, mais non nécessairement obligatoirement, sont disposés dans une goulotte 54 elle aussi appliquée au support 10 et aboutée au fond 15, sont, chacun individuellement, raccordés, dans cette forme de mise en oeuvre, à un bornier 55 convenablement assujetti au fond de cette goulotte 54, ou, à travers ce fond, au support 10.

Le châssis 25, qui, parallèlement, et indépendamment, à été convenablement équipé en appareillages électriques 11 et convenablement câblé en conséquence, soit en atelier, soit sur le chantier, est ensuite rapporté, alors qu'il est ainsi porteur de ces appareillages électriques 11 et dûment cablé, sur le fond 15, par le crochetage des axes 45 qu'il comporte sur les plots d'ancrage 32 prévus à cet effet sur ce fond 15.

Il suffit, dès lors, à l'installateur, d'assurer le câblage restant à réaliser, par raccordement des appareillages électriques 11 aux câbles d'arrivée 12 et aux câbles de départ 13.

Du côté des câbles de départ 13, ce raccordement se fait par des câbles de raccordement 13′, qui sont par exemple câbles par avance sur les appareillages électriques 11 concernés, et qu'il suffit dès lors de raccorder au bornier 55 correspondant.

De même, du côté des câbles d'arrivée 12, le raccordement se fait par des câbles de raccordement 12′, qui sont câblés par exemple par avance sur les appareillages électriques 11 concernés, et qu'il suffit de raccorder au bornier 53 correspondant.

En variante, et en substitution aux borniers 53 et 55, il peut être mis en oeuvre des éléments de connexion embrochables.

Quoi qu'il en soit, il résulte de la saillie faite sur ce fond 15 par les plots d'ancrage 32 que subsiste, avantageusement, entre ce fond 15 et le châssis 25, un espace libre, qui, si désiré, peut être mis à profit pour le passage des câbles d'arrivée 12, ou des câbles de départ 13, en sorte que ces câbles d'arrivée 12 ou ces câbles de départ 13 peuvent indifféremment déboucher d'un côté ou de l'autre de ce fond 15.

Si, dans la forme de mise en oeuvre représentée sur la figure 1, l'implantation des borniers 53, 55 se fait à l'écart de ce fond 15, il va de soi qu'elle pourrait tout aussi bien se faire sur celui-ci, puisque, comme indiqué ci-dessus, le fond 15 est mis en place avant que les câbles d'arrivée 12 et les câbles de départ 13 soient tirés.

C'est le cas, dans la forme de mise en oeuvre représentée sur la figure 2, pour les câbles de départ 13.

En effet, dans cette forme de mise en oeuvre, l'un des espaces libres 36 présents de part et d'autre du châssis 25 est mis à profit pour l'implantation, sur le fond 15, avant la mise en place sur celui-ci du châssis 25, de borniers 55 propres aux raccordements des câbles de départ 13.

Il suffit, ensuite, d'établir des câbles de raccordement 13′ de ces borniers 55 aux appareillages électriques 11.

Dans la forme de mise en oeuvre représentée sur cette figure 2, le raccordement des câbles d'arrivée 12 à ces appareillages électriques 11 se fait par ailleurs directement.

Il en est de même dans la forme de mise en oeuvre représentée sur la figure 3, et, dans cette forme de mise en oeuvre, le raccordement des câbles de départ 13 aux appareillages électriques 11 se fait également directement.

Il est alors avantageusement prévu, dans l'espace libre 36 correspondant, pour le guidage et le maintien de ces câbles de départ 13, des lyres 37.

Dans tous les cas, il suffit, enfin, à l'installateur, après le câblage précédent, de mettre en place l'habillage 16 de l'enveloppe 14, en rapportant, d'abord, sur le châssis 25, en façade de celui-ci, le cadre 47, et en assujettissant, ensuite, à ce cadre 47, suivant les modalités déjà décrites précédemment, les panneaux de côté 17 et le plastron 18 constitutifs de cet habillage 16.

Bien entendu, la présente invention ne se limite pas à la forme de mise en oeuvre décrite et représentée, mais englobe toute variante d'exécution telle que revendiquée dans les revendications qui suivent.

## Revendications

1. Procédé pour l'installation, sur un support (10), d'au moins un quelconque appareillage électrique (11) à raccorder à au moins un câble d'arrivée (12) et à au moins un câble de départ (13), du genre suivant lequel, au terme d'une telle installation, ledit appareillage électrique (11), porté par un châssis (25) solidaire dudit support (10), est disposé au sein d'une enveloppe (14) comportant un fond (15) et un habillage tant latéral que frontal (16), caractérisé en ce que on fixe d'abord au support (10) à équiper le fond (15) de l'enveloppe (14), puis que l'on rapporte sur ce fond (15) le châssis (25), qui, parallèlement, et indépendamment, a été équipé de l'appareillage électrique (11) concerné et câblé en conséquence, et que l'on met ensuite en place l'habillage (16) correspondant.

2. Procédé suivant la revendication 1, caractérisé en ce que, après avoir fixé, sur le support (10) à équiper, le fond (15) de l'enveloppe (14), et avant de rapporter sur ce fond (15) le châssis (25) porteur de l'appareillage électrique (11) concerné, on dispose convenablement par rapport audit fond (15) le câble d'arrivée (12) et le câble de départ (13) correspondants.

3. Procédé suivant l'une quelconque des revendications 1, 2, caractérisé en ce que on ménage un espace libre (36) entre le fond (15) de l'enveloppe (14) et le châssis (25) rapporté sur celui-ci.

4. Procédé suivant l'une quelconque des revendications 1 à 3, caractérisé en ce que on ménage un espace libre (36) le long de l'un au moins des bords du fond (15) de l'enveloppe (14), entre ce bord et le chassis (25) rapporté sur ce fond (15).

5. Procédé suivant l'une quelconque des revendications 1 à 4, caractérisé en ce que on met en place l'habillage (16) de l'enveloppe (14) en rapportant, sur le châssis (25) porteur de l'appareillage électrique (11) concerné, en façade dudit châssis (25), un cadre (47), et en assujettissant à ce cadre (47) ledit habillage (16).

6. Procédé suivant l'une quelconque des revendications 1 à 5, caractérisé en ce qu'on prend pour fond (15) un fond (15) comportant, en saillie, pour permettre d'y rapporter un châssis (25) une pluralité de plots d'ancrage (32).

7. Procédé suivant la revendication 6, caractérisé en ce qu'on prend pour fond (15) un fond (15) dans lequel il est prévu, le long d'un de ses bords, entre ce bord et les plots d'ancrage (32), un espace libre (36).

8. Procédé suivant la revendication 7, caractérisé en ce qu'on prend pour fond (15) un fond (15) dans lequel ledit espace libre (36) est mis à profit pour l'implantation, en saillie, de moyens de logement pour au moins un câble.

9. Procédé suivant la revendication 8, caractérisé en ce qu'on prend pour fond (15) un fond (15) dans lequel lesdits moyens de logement comportent une pluralité de lyres (37) établies de place en place le long dudit bord.

10. Procédé suivant l'une quelconque des revendications 1 à 9, caractérisé en ce qu'on prend pour châssis (25) un châssis (25) comportant, parallèlement l'un à l'autre, deux montants (26), avec, de l'un à l'autre de ces montants (26), pour recevoir l'appareillage électrique (11) concerné, au moins un rail (27), ledit châssis (25) comportant en outre, perpendiculairement au plan formé par lesdits montants (26), pour former des entretoises pour un cadre (47) à rapporter sur lui, des piliers (46).

11. Procédé suivant la revendication 10, caractérisé en ce qu'on prend pour châssis (25) un châssis (25) comportant un pilier (46) à chacune des extrémités de chacun de ses montants (26).

12. Procédé suivant l'une quelconque des revendications 10,11, caractérisé en ce qu'on prend pour châssis (25) un châssis (25) comportant, entre ses montants (26), au moins une traverse (48) établie d'un pilier (46) à un autre à distance du plan formé par lesdits montants (26).

## Patentansprüche

1. Verfahren zur Montage von mindestens einem beliebigen elektrischen Gerät (11), das an mindestens einem Eingangskabel (12) und mindestens einem Ausgangskabel (13) anzuschließen ist, auf einem Träger (10), gemäß welchem das elektrische Gerät (11), das von einem mit dem Träger (10) fest verbundenen Gestell (25) getragen ist, nach der Montage im Inneren eines Gehäuses (14) angeordnet ist, das einen Boden (15) und eine sowohl seitliche wie frontale Verkleidung (16) umfaßt, dadurch gekennzeichnet, daß man zunächst an dem zu bestückenden Träger (10) den Boden (15) des Gehäuses (14) befestigt, daß man dann an diesen Boden (15) das Gestell (25) anbringt, das parallel und unabhängig mit dem betreffenden, entsprechend verdrahteten elektrischen Gerät (11) ausgerüstet wurde, und daß man anschließend die entsprechende Verkleidung (16) montiert.

2. Verfahren nach Anspruch 1, dadurch gekennzeichnet, daß man nach Befestigung des Bodens (15) des Gehäuses (14) an den zu bestückenden Träger (10) und vor der Anbringung des das entsprechende elektrische Gerät (11) tragenden Gestells (25) an diesem Boden (15) das entsprechende Eingangskabel (12) und das entsprechende Ausgangskabel (13) in geeigneter Weise bezüglich des Bodens (15) anordnet.

3. Verfahren nach einem der Ansprüche 1, 2, dadurch gekennzeichnet, daß man zwischen dem Boden (15) des Gehäuses (14) und dem an diesem angebrachten Gestell (25) einen freien Raum (36) vorsieht.

4. Verfahren nach einem der Ansprüche 1 bis 3, dadurch gekennzeichnet, daß man längs mindestens eines der Ränder des Bodens (15) des Gehäuses (14) zwischen diesem Rand und dem an dem Boden (15) angebrachten Gestell (25) einen freien Raum (36) vorsieht.

5. Verfahren nach einem der Ansprüche 1 bis 4, dadurch gekennzeichnet, daß man die Verkleidung (16) des Gehäuses (14) montiert, indem man an dem das entsprechende elektrische Gerät (11) tragenden Gestell (25) an der Vorderfront dieses Gestells (25) einen Rahmen (47) vorsieht und an diesem Rahmen (47) die Verkleidung (16) befestigt.

6. Verfahren nach einem der Ansprüche 1 bis 5, dadurch gekennzeichnet, daß man als Boden (15) einen Boden (15) nimmt, der hervorstehend eine Mehrzahl von Verankerungselementen (32) umfaßt, um daran ein Gestell (25) anbringen zu können.

7. Verfahren nach Anspruch 6, dadurch gekennzeichnet, daß man als Boden (15) einen Boden (15) nimmt, in dem längs eines seiner Ränder zwischen diesem Rand und den Verankerungselementen (32) ein freier Raum (36) vorgesehen ist.

8. Verfahren nach Anspruch 7, dadurch gekennzeichnet, daß man als Boden (15) einen Boden (15) nimmt, in dem der freie Raum (36) zum hervorstehenden Einbau von Einrichtungen zur Aufnahme wenigstens eines Kabels verwendet wird.

9. Verfahren nach Anspruch 8, dadurch gekennzeichnet, daß man als Boden (15) einen Boden (15) nimmt, in dem die Aufnahmeeinrichtungen eine Vielzahl von Leiern (37) umfassen, die stellenweise längs des Randes angeordnet sind.

10. Verfahren nach einem der Ansprüche 1 bis 9, dadurch gekennzeichnet, daß man als Gestell (25) ein Gestell (25) nimmt, das parallel zueinander zwei Ständer (26) mit von einem zum anderen Ständer (26) mindestens einer Schiene (27) zur Aufnahme des elektrischen Geräts (11) umfaßt, wobei das Gestell (25) außerdem senkrecht zu der von den Ständern (26) geformten Ebene zur Bildung von Querstegen für einen an ihm anzubringenden Rahmen (47) Stützen (46) umfaßt.

11. Verfahren nach Anspruch 10, dadurch gekennzeichnet, daß man als Gestell (25) ein Gestell (25) nimmt, das eine Stütze (46) an jedem der Enden jedes seiner Ständer (26) umfaßt.

12. Verfahren nach einem der Ansprüche 10, 11, dadurch gekennzeichnet, daß man als Gestell (25) ein Gestell (25) nimmt, das zwischen seinen Ständern (26) wenigstens eine Traverse (48) umfaßt, die von einer Stütze (46) zu einer anderen in einem Abstand von der von den Ständern (26) gebildeten Ebene angeordnet ist.

## Claims

1. A process for the installation, on a support (10), of at least one piece of electrical equipment (11) of any kind which is to be connected to at least one input lead (12) and to at least one output lead (13), of the kind in which after installation in this manner, said piece of electrical equipment (11), carried by a framework (25) fixed to said support (10), is disposed within a casing (14) comprising a base (15) and a cover (16) both at the front and at the sides, characterised in that the base (15) of the casing (14) is first of all secured to the support (10) to be provided with it, and then the framework (25) is connected to the base (15), the framework having been provided with the piece of electrical equipment (11) concerned in a parallel and separate operation and having been wired appropriately, and the corresponding cover (16) is then put in place.

2. A process according to Claim 1, characterised in that after having secured the base (15) of the casing (14) to the support (10) to be provided with it, and prior to connecting the framework (25) which carries the piece of electrical equipment (11) concerned to the base (15), the corresponding input lead (12) and output lead (13) are arranged suitably relative to said base (15).

3. A process according to any one of Claims 1, 2, characterised in that a free space (36) is formed between the base (15) of the casing (14) and the framework (25) connected thereto.

4. A process according to any one of Claims 1 to 3, characterised in that a free space (36) is formed along one, at least, of the edges of the base (15) of the casing (14), between that edge and the framework (25) connected to the base (15).

5. A process according to any one of Claims 1 to 4, characterised in that the cover (16) of the casing (14) is put in place by connecting to the front face of said framework (25) which carries the piece of electrical equipment (11) in question a frame member (47), and by placing said cover (16) over the frame member (47).

6. A process according to any one of Claims 1 to 5, characterised in that the base (15) is in the form of a base (15) which has a plurality of projecting anchoring blocks (32) to enable a framework (25) to be joined thereto.

7. A process according to Claim 6, characterised in that the base (15) is in the form of a base (15) in which a free space (36) is provided along one of the edges of the base, between the base and the anchoring blocks (32).

8. A process according to Claim 7, characterised in that the base (15) is in the form of a base (15) in which said free space (36) is used for fitting inside it projecting receiving means for at least one cable.

9. A process according to Claim 8, characterised in that the base (15) is in the form of a base (15) wherein said receiving means comprise a plurality of stirrup members (37) formed from place to place along said edge.

10. A process according to any one of Claims 1 to 9, characterised in that the framework (25) is in the form of a framework (25) which has two mutually parallel uprights (26) with at least one rail (27) between each of these uprights (26) to receive the piece of electrical equipment (11) in question, said framework (25) additionally comprising shafts (46) which are perpendicular to the plane formed by said uprights (26), so as to form crosspieces for a frame member (47) to be connected to the framework.

11. A process according to Claim 10, characterised in that the framework (25) is in the form of a framework (25) which has a shaft (46) at each end of each of its uprights (26).

12. A process according to any one of Claims 10, 11, characterised in that the framework (25) is in the form of a framework (25) which has at least one crossbar (48) between each of the shafts (46) at a spacing from the plane formed by said uprights (26).
